# EUROPEAN PATENT APPLICATION

(11) **EP 1 860 000 A2**
(43) Date of publication of application: **28.11.2007**
(21) Application number: 07405148.3
(22) Date of filing: 22.05.2007
(51) Int. Cl.: B60R 21/16

(54) **Apparatus for controlling the inflation of an airbag in an automobile**

(30) Priority: 23.05.2006 CH 8332006
(71) Applicant: APHRODITE AGENCIES LTD., St. Peter, Jersey JE37E, Channel Islands (GB)
(72) Inventor:
(74) Representative: Gaggini, Carlo

(57) **Abstract**

The inventive device according to the present invention for controlling the explosion of an airbag, or respectively for adapting the force of the explosion of the airbag to the weight of the occupant sitting on the polyether cushion (1) of an automobile, comprising a hydraulic sensor in form of a flexible elastic tube (4, 4') filled with a fluid, which is closed at on end and is connected at its other end to a pressure gauge and signal transmitter for electric signals (3). According to the invention, for ensuring absolute reliability of the function of the device, and for permitting very easy assembly, as well as for achieving very low manufacturing cost, the tube (4) is completely embedded, together with the pressure gauge and signal transmitter (3), inside the foam body (8) forming the structure of the polyether cushion (1), and is held in its correct position during the foaming phase, using a support fabric (9) onto which it is fastened preventively.

## Description

The present invention concerns a safety device for controlling the explosion (or inflation respectively) of an airbag, namely for adapting the force of the explosion of the airbag to the body weight of the occupant of a seat in an automobile as described in the introductory part of the claim 1.
The problem of safety of passengers, including the driver, of an automobile, is of great concern the producers, and has become ever more important in view of the increase in sensitivity of the population and of the number of vehicles on the road. A basic invention in this field, in addition to the safety belt, certainly was the so-called airbag (a cushion rapidly inflated in case of a collision impact), which originally was installed merely for the driver, and for this purpose in many cases was incorporated in the steering wheel of the automobile, and later on was applied also for other uses in the vehicle. Most interesting in the context of the present invention is the application of the airbag for the driver and for the passenger(s) sitting next to the driver.
One of the first problems that concerned the designers - after the problem of the driver who is most exposed to the danger of hitting his breast against the steering wheel was resolved - is the fact that, if an airbag is installed in series also on the passenger side, if a collision impact occurs, always both airbags pop up even if the passenger seat is empty, which causes inconvenient troubles and additional useless costs. Proposals thus were made to prevent the popping up of the passenger airbag in case of absence of a passenger, which was achieved in various known modes, such as making the reaction of the airbag depend on whether the safety belt was strapped or not, or providing the passenger airbag with a sensor scanning the presence of a passenger, which e.g. is able to feel whether the seat upholstery was more or less subject to compression, or even providing the windshield inside frame with sophisticated electronic monitoring means (tele-camera, etc.). Among the important aspects of this technical evolution there was also the proposal of adapting the force of the explosion of the airbag (be it the one for the passenger or, in future, for the driver) to the actual weight of the person sitting on the seat, namely by adapting the explosion force of the airbag (i.e. its inflation pressure) in function of the weight of the person to be protected. Actually the purpose of an airbag, which in general is to be capable to protect persons against the more serious danger of hitting their heads against the windshield or the dashboard of the vehicle, however in itself represents a certain peril as it can be compared to a hard punch to the face. Evidently such a blow must have more force, if a heavy person is to be kept back, whereas for a light weight person (e.g. of less than 48 kg) it is excessive, and thus it even can prove dangerous to apply the maximum inflation force of the airbag. Thus the necessity arises of determining the weight of the person sitting on the seat (which also applies to the driver) and to provide the activating device of the airbag with suitable means for adapting the inflation pressure to the weight of the person to be protected.
No wonder that in this field countless proposals are known from practical application and even more so from the patent literature, which however thus far have not brought along any convenient, and thus universally accepted, solution of the problem, even if in certain countries adoption of these safety provisions described already are stipulated in laws, such as e.g. in the U.S.A.
This stems from the fact that the known proposals do not yet meet the indispensable characteristics the safety device, to which the present invention pertains, must possess, which are the following:
a) absolute reliability of the reaction mode and of the timing. Inflation of an airbag naturally occurs very rarely, but must be activated with certainty only if emergency conditions crop up. Nothing is more dangerous than an untimely inflation of an airbag, e.g. in the case of a "slight impact", which certainly can cause a most serious accident. Furthermore the airbag must remain operable over many years, i.e. over the entire lifespan of the vehicle (10 years or more) as an accident might happen at any moment. The airbag thus is not to be incapacitated by age.
b) moderate cost, which also means utmost simplicity and avoidance of sophisticated electronic systems for determining the weight, which often tend to be impaired when they are needed most. Moderate cost is required also because safety devices are concerned, which according to laws are to be installed in all automobiles, taking into account the fierce competition the manufacturers are facing, if they want to keep their market.
For these reasons no satisfactory solution of the problem has been found yet; which is proved by the frequent technical demands by all car manufacturing companies.
The systems best known in practical application are e.g. the one supplied by the Luxembourg IEE Automotive Products company, consisting of a "small carpet" of small plastic rods in which electric resistor cells are incorporated, which carpet is inserted into a non-woven lining which in turn is placed into the upper upholstering layer and is fastened using metallic clips. Notwithstanding all these labour-intensive procedures of preparation and installation the "small carpet" tends to shift putting in jeopardy the reliable function, as obviously this weight sensor can furnish precise measuring values only if it is located in its exactly determined position under the pressure exerted by the weight of the body sitting on the upholstered seat. Above all the "carpet" is quite expensive and its substitution cannot be effected without total destruction of the seat.
From PCT WO79/26084 systems are already known, based on incorporation of a hydraulic weight sensor in the device, comprising a flexible and continuous tube of the sensor, containing a fluid also filled into a bladder-pouch, always located above, or under, or to the side of the polyether cushion, but never located inside the cushion itself. A pressure gauge is operatively coupled to the tube of the sensor. The tube can be arranged inside the cushion in a wavy line or a spiral, or can comprise a plurality of segments which all are connected to a common main connector. A load applied to the seat deforms the tube, increasing the inside pressure and a processor determines the weight of the person sitting from the pressure signal supplied.
Doubtlessly this proposal represents the most valid state of the art known today. Particularly the idea of using as pressure sensor a tube filled with a liquid certainly is convincing with respect to all other known methods because of its simplicity, reliability and low cost. The solution shown in the patent applications cited, however, involves an important disadvantage impairing its reliability and up to now has prevented widespread adoption. The disadvantage is seen in that the flexible tube or the bladder-pouch, respectively, filled with a fluid, or with a liquid respectively, is simply inserted between the seat cushion and its rigid support bowl during the assembly of the cushion onto the bowl. The Figures 4a through 4c clearly show how the tube freely extends between the cushion and the bowl, and how it is pressed and deformed into a more or less rectangular cross-section shape. It is not shown, however, how the tube is anchored in any manner to the cushion or to the bowl in such a manner that its position seems to be quite random. In any case such positioning of the tube or of the bladder-pouch entails two serious disadvantages, namely that the system (be it arranged in spiral form or in snake-like form or in another shape) can shift from its original position under the influence of vertical and horizontal strains exerted by the passenger sitting on the seat, and furthermore that the deformations to which the cross-section of the tube is subject, on the long run can cause wear due to fatigue of the tube walls, resulting in corresponding losses of elasticity and eventually in rupture of the walls.
From the experience gained by the applicant for the present invention from a field of application for completely different purposes, realised in the European patent application EP-A-1216911, it has been found that the flexible tube filled with a liquid, used therein as a safety element for detecting panic reactions of a driver of a motorcycle or an automobile, performs more efficiently, if the tube is totally immersed in an elastically deformable polyether foam. An arrangement of this type protects the tube against detrimental external influences such as temperature, humidity, vibrations, friction, etc.
It is the objective of the present invention to eliminate the disadvantages mentioned above still prevailing in the corresponding state of the art (i.e. in the PCT WO 99/26084), making use partially of the expertise gained by the applicant by realizing the object of the EP-A-1216911, in order to create a security device for controlling the explosion of an airbag with absolute reliability, at low manufacturing cost for the seat cushion and for assembling the seat, and requiring a minimum of maintenance.
All these advantages, and others that will be explained in the more detailed description of the present invention, can be obtained using a device presenting the characteristics of the claim 1. Concerning the manufacturing process of the inventive device, object of the depending claim 10, furthermore the advantages pertaining to the flexibility and speed of the seat assembly, and to the fact that in case of damage to the seat or to the liquid-filled tube it is possible to recuperate the pressure gauge and the electric signal transmitter, which can be re-used, namely also in the production of the polyether cushion.
The present invention will be described in more detail in the following with reference to various realisation examples shown in the adjoining illustrations. It is shown in the:
- Fig. 1: A schematic top view of the cushion of an automobile incorporating, as an alternative, two different arrangements of the elastic flexible tube 4;
- Fig. 2: The cushion 1 according to the Fig. 1 in a schematic lateral view in a first realisation variant of the present invention, in which the supporting fabric 9 with one side rests directly on the rigid bowl of the seat;
- Fig. 3: An enlarged cross-section across the loops of the flexible elastic tube 4;
- Fig. 4: A schematic cross-section of the foam body and across the branches of the flexible elastic tube in a particular solution in which the supporting fabric is completely immersed inside the foam body of the cushion;
- Fig. 5: A view similar to the one shown in the Fig. 4, in which also a solution is shown, which permits holding up of the supporting fabric, as well as permitting detection of the position of the pressure gauge and of the electric signal transmitter from the outside;
- Fig. 6: A purely schematic top view showing the arrangement of spacing elements holding up the support fabric of the tube during the foaming of the foam body.

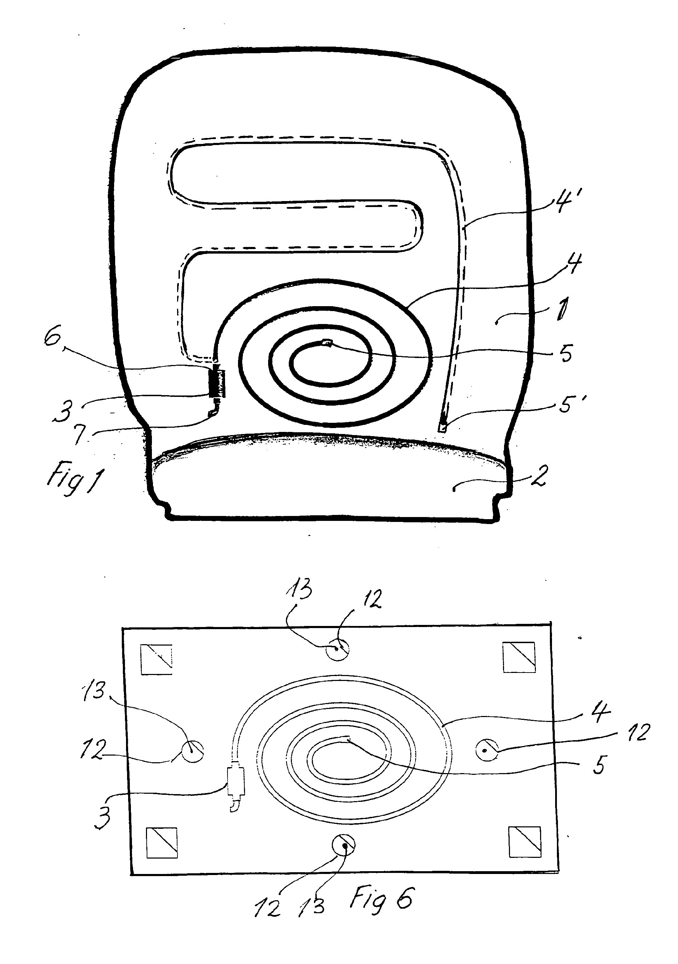

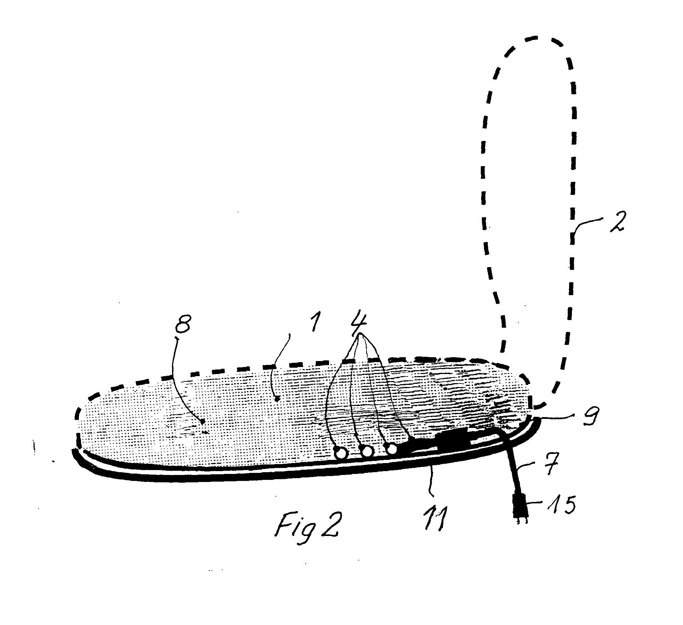

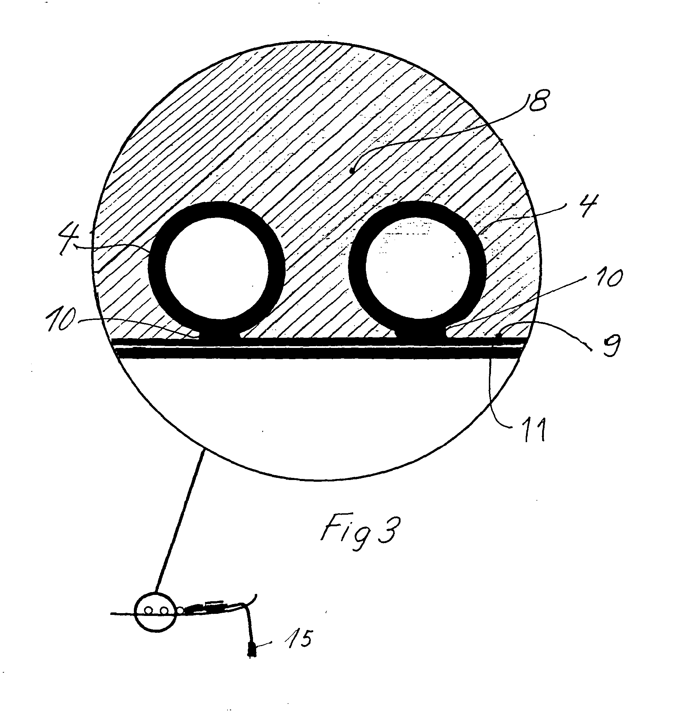

In the Fig. 1, which schematically shows a cushion of an automobile equipped with the inventive safety device in a top view, the polyether cushion is designated 1, whereas the vertical backrest of the seat is designated 2. It is to be noted in this whole description that an automobile seat (be it the one of the driver or the one of any one of the passengers) consists of the seat cushion proper, which substantially extends horizontally and on which a person occupying it is sitting, and of a backrest extending essentially vertically, supporting the vertebral column.
In the Fig. 1 it is shown schematically, just as if an upper portion of the polyether cushion had been taken off, a pressure gauge and signal transmitter 3 from which a first tube extends, made of flexible elastic material and filled with a fluid 4, arranged in the form of an Archimedean spiral in a plane.
In the same Fig. 1 it is shown that in line with the pressure gauge and the transmitter 3 for electric analogue signals a second elastic tube 4' is connected to it, indicated with a solid line, and one with a dashed line. This second tube 4' arranged in the cushion 1 in a zigzag or wavy line according to the invention can be understood as an alternative form with respect to the Archimedean spiral 4 or, if required, as a complementary form to that shape. Expressed in other words: in the cushion 1 the fluid-filled tube can be simple and can be laid out in various shapes (as a spiral 4, as a wavy line 4', etc.), or can also be combined, namely presenting a plurality of branches 4 and 4'. The layout of the tube 4 in the cushion 1 depends on the actual requirements (size of the seat cushion, type of the automobile, etc.) and does not represent a basic element of the present invention. Actually such form of the tube layout is known according to the state of the art (e.g. according to the PCT WO 99/26084 cited above). Merely the fact is important that the flexible elastic tube 4 - known as such from the patent documents cited in the introduction - permits correct detection the pressure exerted by person sitting correctly on the cushion 1 of an automobile.
The tube 4 made from flexible and elastic material, is filled with a fluid, preferentially glycol, silicon oil or similar, according to specific solutions, and is closed and sealed tight at one end 5, 5', whereas the other end 6 is connected to the pressure gauge and the transmitter 3 for the electric analogue signal. If pressure is exerted onto any zone of the tube 4, an increase in hydrostatic pressure is caused in the tube 4, which immediately is transmitted to the pressure gauge 3 in which this increase in pressure is transformed into an electric analogue signal, which using a suitable connecting cable 7 is transmitted to the control unit (not shown) of the safety devices, in particular to the activating device of the airbag, with which the automobile is equipped. Thus it is evident that obtaining a measured electric analogue signal opens the way to controlling the airbag in function of the presence and of the actual weight of the person occupying the seat in such a manner that the force of the popping of the airbag can be adapted, applying suitable steps, to the weight of the person to be protected. For a child weighing 30 kg the airbag is not to explode with the same force as is required to hold back a person weighing 80 kg.
All of this represents techniques known today from practical use and from the patent literature, and thus unnecessary further explanations can be dispensed with.
What, on the other hand, constitutes novelty and the basic characteristic of the present invention is the fact that the tube 4 made from flexible and elastic material is imbedded completely, together with the pressure gauge 3, in the polyether cushion 1 inside the foam body 8 (compare the Figures 2, 3, 4, and 5) forming the structure of the cushion 1, and furthermore, according to the other basic characteristic of the present invention, that the tube 4 is fixed onto the upper side (i.e. the upward facing side) of the surface of a compact supporting fabric 9 (compare the Figures, 3, 4, and 5) extending essentially over the whole horizontal surface of the cushion 1.
The purpose of the support fabric 9, which preferentially can be a non-woven fabric owing to its stability characteristics, is to secure the position of the flexible tube 4 during the foaming process in order to ensure complete immersion thereof, fundamental for the present invention, in the foam body. Actually, if the tube 4 would not be fixed durably while the foam material 8 expands, it certainly would be shifted and displaced by the foam, which moves during the initial phase of the foaming process, putting in jeopardy, or rendering entirely erratic, the possibility of placing the flexible tube 4 in its correct position. Evidently this characteristic substantially distinguishes the present invention from the state of the art cited above and known thus far.
Fixation of the compact support fabric 9 can be effected, according to a preferred form of realisation of the invention shown in the Figures 2, 3, 4, and 5 for gluing the tube 4 onto the surface of the support fabric 9 oriented upward, using an elastic silicon adhesive, or a double-sided adhesive tape 10 (compare the Fig. 3, in which an enlarged detail is shown of a portion of the Fig. 1). This system permits protecting the tube 4 where ever the tube 4 and the fabric 9 might be placed near small metal springs or clips or other non-flat items present in the seat bowl 11.
In this case the cushion 1 then is placed onto the rigid bowl 11 (made from metal or from synthetic material) with the lower surface of the support fabric 9, which directly rests against the bowl 11 (in the Figures 2 and 3 a small space is left free between the fabric 9 and the bowl 11 merely for better clarity of the illustration). The connecting cable 7 protruding from the support fabric 9 via an opening (not shown) is prepared in such a manner that the opening is sealed against the expanding foam. For the same purpose the support fabric 9 preferentially is a compact non-woven fabric, as during the process of formation of the foam body 10 in the foaming mould (compare the claim 10 of the manufacturing procedure), with the support fabric 9 resting against the base of the foaming mould, no leaking of the polymer material - just as via the opening for the connecting cable 7 - is to occur during the foam expansion phase.
According to a preferred form of realisation of the invention shown in the Figures 4, 5, and 6, it also is provided that the support fabric 9 is to be entirely embedded in the cushion 1 inside the foam body 8, in which case the support fabric 9 is held up in a plurality of points 12 by distancing or spacing elements 13 made from polystyrene foam (or from any material tending to retreat and "disappear" solving itself when heated during the foam expanding phase in such a manner that no disturbances are caused when the finished foam body 8 is extracted from the foaming mould), which prevent shifting and displacement of the support fabric 9 during the foaming operation.

According to a further form of realisation of the invention it is provided that the position of the pressure gauge and the transmitter of electric signals 3 be indicated on the surface of the support fabric 9 facing downward. The purpose of this arrangement is to permit easy retrieval of the pressure gauge and the electric signal transmitter 3 including its annexes (cable 7, connecting plug 15, protecting cap 16), in case of defects in the safety system and/or damages to the structure of the cushion1.

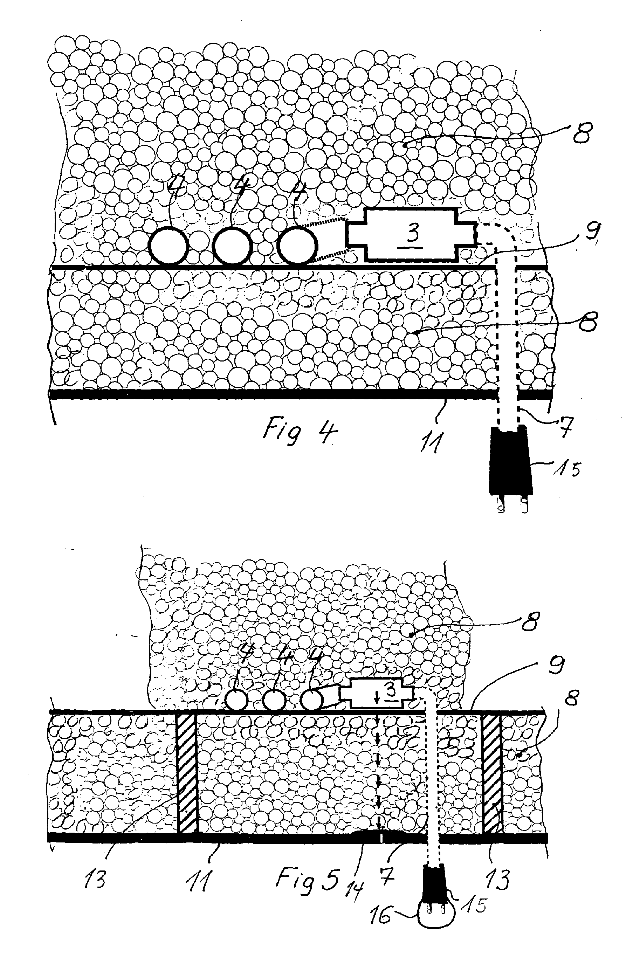

In the Fig. 5 it is shown in which manner the position of the pressure gauge and the electric signal transmitter 3 can be signalled, in the special case in which the support fabric 9 is entirely embedded in the foam body 8, by providing a protrusion or any other sign 14 visible from the outside.
Another form of realisation of the invention, based on previous experience of the applicant in connection with the object of the EP-A-1216911, provides that the elasticity of the foam of which the foam body 8 consists be equal or lower than the elasticity presented by the fluid-filled flexible tube 4. This stems from the fact that, if the foam body 8 is excessively rigid, it can not be deformed, or be deformed sufficiently, for adequately compressing the liquid contained in the flexible pressure measuring tube 4.
According to another preferred form of realisation of the present invention it is provided that the electric signal measured be processed, using today's normal procedures, in a control computer provided for the various control devices of the automobile, often referred to as central control unit, which reacts on the basis of at least two threshold values, one of which corresponds to a signal emitted by the pressure gauge 3 in the presence of a person weighing less than about 48 kg (i.e. corresponding to a child or a person of slight build) occupying the seat, whereas the second threshold value corresponds to an electric signal emitted by the pressure gauge 3 in the presence of a person occupying the seat cushion 1 weighing between about 48 and 70 kg (i.e. a person of "normal" stature), where the inflation pressure of the airbag is set to a minimum in correspondence to the first reaction threshold, and is set to medium pressure up to the second threshold value and set to the maximum above the second reaction threshold value.
This possibility of adapting the inflation force of the airbag to the weight of the person occupying the seat cushion is facilitated by the fact that the electric signal transmitted from the pressure gauge 3 is an analogue signal and thus permits indication of any variation in the weight acting onto the cushion 1 without solution of continuity, in such a manner that also 2, 3, or more pressure signal thresholds per airbag can be predetermined.
Technically it could be imagined also, always within the scope of the present invention, that the explosion force of the airbag be proportional to the weight measured of the person occupying the seat 1 at all times, but it can be stated that adoption of predetermined threshold values results in less costly practical realisations, which is, as stressed already in the introduction, one of the main objectives of the present patent application.
The claim 10 concerns an optimal method of realisation of the inventive safety device, which is characterised in that the tube 4 of elastic material, filled with a fluid and connected at one end to a pressure gauge and a transmitter for the electric analogue signal 3 first is fastened, using an elastic silicon adhesive, or a double sided adhesive tape, or using a thermal treatment, to the surface of a compact support fabric 9, preferentially a non-woven fabric. Upon this operation the support fabric 9 is placed with the tube 4 arranged on its upper side, in the open foaming mould (not shown), namely onto the bottom of the mould or, according to a preferred form of realisation, to the middle of the cavity formed by the foaming mould. In this second case care is taken that the support fabric 9 is held up on its back side, or from both sides, using suitable distancing elements 13, which hold the fabric 4 in a more or less extended position during the subsequent foaming phase. For this purpose the foaming mould is closed and the material (polyether) is fed in, which expands and fills the whole mould with foamed material, the support fabric 4 as well as the pressure gauge 3 and part of the cable 7 being embedded.
After this process the foam body 8 from which the connecting cable 7 protrudes, in its lower portion, with the pressure gauge and the transmitter for the electric signal 3, is lined with a cover made from cloth, hide or similar material, and subsequently is placed onto the rigid support bowl 11 of the seat 1. The bowl 11 of course is provided with an opening through which the connecting cable 7 already equipped with a connecting plug 15 with a protecting cap 16 can be pulled.
This manufacturing method presents the advantage of ease of assembly of the cushion 1 to complete the seat. On the assembly line the seat merely is to be inserted into the bowl 11 onto the suitable guides and the cable 7 is to be connected to the control unit using the plug 15, without paying further attention to the correct positioning of the sensor, as it was necessary in the case of the cited earlier solutions. Furthermore the tube 4 of the sensor is absolutely secured in its correct position as it is completely embedded in the foam body 8, which ensures absolute functional efficiency.
According to an additional improvement of the inventive manufacturing method it is provided that the operation of adhesively fastening the flexible tube 4 on the support fabric 9 using a silicon adhesive 10, or a double sided adhesive tape, or a suitable thermal treatment be effected using a robot for distributing the adhesive, of the double sided adhesive tape, or for the thermal treatment, and for correct positioning of the elastic tube 4. This procedure permits further rationalisation of the inventive device by eliminating a demanding manual operation such as the arrangement of the flexible tube into a rather specific shape (wavy line, spiral, etc.) on the support fabric 9. Furthermore a suitable system can be provided for positioning the tube including the pressure gauge 3 exactly onto the path of the adhesive 10 placed onto the fabric.
The present invention in principle is characterised by its great reliability, owing to the anchoring and to the complete protection of the flexible measuring tube 4 in the cushion 1, and owing to its low cost of realisation.
Practical experience has proven that the inventive solution costs several times less than the solutions known and practically applied thus far, e.g. the one using a "carpet" of small plastic rods including electrical resistance cells, or the one using a bladder-pouch and a tube.
The present invention thus permits automobile designers to adapt more easily to the demands for safety measures imposed by traffic laws.

### Reference Numbers Used in the Figures

- 1: Polyether cushion
- 2: Backrest
- 3: Pressure gauge and signal transmitter for electric analogue signals
- 4: Flexible tube filled with a fluid
- 5: End of the tube
- 6: End of the tube
- 7: Connecting cable
- 8: Foam body
- 9: Compact support fabric
- 10: Adhesive or double sided adhesive tape
- 11: rigid bowl of the seat
- 12: Support point
- 13: Distancing element
- 14: Protrusion or indicator element
- 15: Connecting plug
- 16: Protecting cap

## Claims

1. Safety device for controlling the explosion of an airbag, or respectively for adapting the force of the inflation of the airbag to the weight of the person occupying the seat, incorporated into the polyether cushion (1) of an automobile, comprising a hydraulic or pneumatic sensor in form of a tube made from flexible and elastic material (4, 4'), filled with a fluid, closed at one of its ends (5, 5') tightly sealed and connected at the other end with a pressure gauge and transmitter for analogue electric measuring values (3),
**characterised in that**
the tube (4) made from flexible and elastic material is completely embedded, together with the pressure gauge (3), in the cushion (1) inside the foam body (8), which forms the structure of the seat and is fastened to the upper surface of a compact support fabric (9), preferentially a non-woven fabric, extending essentially over the whole horizontal surface of the cushion (1).

2. Safety device according to the claim 1,
**characterised in that**
the tube (4) made of elastic material embedded in the polyether cushion (1) is arranged in the form of an Archimedean spiral in a plane.

3. Safety device according to the claim 1,
**characterised in that**
the tube (4) made of elastic material embedded into the polyether cushion (1) is arranged in wavy or zigzag line form.

4. Safety device according to the claim 1,
**characterised in that**
fixation of the tube (4) on the surface of the compact support fabric (9) oriented upward is effected using an elastic silicon adhesive, or a double sided adhesive tape (10), or using a thermal treatment.

5. Safety device according to the claim 1,
**characterised in that**
the position of the pressure gauge und the transmitter (3) for electric analogue signals is indicated on the surface of the support fabric (9) oriented downwards in such a manner that the pressure gauge and the signal transmitter or electric analogue signals (3) can be easily retrieved and recuperated, in case of defects in the safety device and/or defects in the structure of the polyether cushion (1).

6. Safety device according to the claim 1,
**characterised in that**
also the support fabric (9) is completely immersed in the polyether cushion (1) inside the foam body (8) and is held up by distancing elements (13) made from foamed polystyrene, polyester, etc., which prevent shifting during the foaming operation.

7. Safety device according to the claim 1,
**characterised in that**
if the sensor is a hydraulic sensor, the liquid filling the tube (4) is glycol, silicon oil, or a similar liquid.

8. Safety device according to the claim 1,
**characterised in that**
the elasticity of the foam forming the foam body (8) is equal to, or lower than the elasticity of the flexible tube (4) filled with liquid.

9. Safety device according to the claim 1,
**characterised in that**
the electric signal measured is processed in a computer controlling a plurality control devices of the automobile, which reacts on the basis of at least two threshold values, one of which corresponds to an electric signal emitted by the pressure gauge (3) if a person weighing less than 48 kg is occupying the seat (1), whereas the second reaction threshold value corresponds to the electric signal emitted by the pressure gauge (3) if a person weighing between 48 and 70 kg is occupying the cushion (1), where the inflation pressure of the airbag is at a minimum up to the first reaction threshold value, is medium up to the second reaction threshold value, and at a maximum above the second reaction threshold value.

10. Method of manufacturing the safety device for controlling the explosion of an airbag according to the claims 1 through 9,
**characterised in that**
the tube (4), made from elastic material and filled with a fluid and connected at one end to a pressure gauge and a transmitter for analogue electric measuring values (3), first is fastened, using an elastic silicon adhesive, or a double sided adhesive tape, or using a thermal treatment, to the surface of a compact support fabric (9), preferentially a non-woven fabric, whereupon the support fabric (9) is placed, with the tube (4) fastened to its upper surface, into the open foaming mould, said more precisely, either onto the bottom of the mould, or at about midheight of the foaming mould, where in this second case the fabric (9) is held up on its back side or on both sides, using suitable distancing elements (13) holding it in position under tension during the subsequent processing phase, whereupon the foaming mould is closed and the material is fed in, which expands and fills the whole mould with expanded foam, whereupon the formed foam body (8), from which a connecting cable (7) with a connecting plug (15) and a protecting cap (16) protrudes, and with the pressure gauge and the signal transmitter for electric signals (3), is lined with a cover made from cloth, or hide, or from a similar material, and subsequently is placed into the rigid support bowl (11) of the polyether cushion (1) provided with an opening through which the connecting cable (7) already provided with the connecting plug (15) is pulled through to be connected to the cable system of the vehicle.

11. Manufacturing method according to the claim 10,
**characterised in that**
the operation of adhesively fastening, using elastic silicon adhesive (10), or using a double sided adhesive tape, or using a thermal treatment, is effected using a robot for distributing the adhesive, the double sided adhesive tape, or for the thermal treatment, and for the corresponding placement of the elastic tube (4).
